(11) **EP 2 947 270 B3**

(12) ## NEUE EUROPÄISCHE PATENTSCHRIFT
Nach dem Beschränkungsverfahren (B3-1)

(45) Hinweis auf die Patenterteilung:
**02.11.2016   Patentblatt 2016/44**

(45) Veröffentlichungstag und Bekanntmachung des Hinweises auf die Entscheidung über den Antrag auf Beschränkung:
**B3-1  14.03.2018   Patentblatt 2018/11**

(21) Anmeldenummer: **15156107.3**

(22) Anmeldetag: **23.02.2015**

(51) Int Cl.:
*F01D 5/14* (2006.01)     *F01D 9/04* (2006.01)
*F04D 29/54* (2006.01)     *F01D 5/02* (2006.01)
*F01D 5/20* (2006.01)     *F04D 29/32* (2006.01)

(54) **Schaufelreihengruppe**

Rotor series group

Groupe de série d'aubes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014   DE 102014203605**

(43) Veröffentlichungstag der Anmeldung:
**25.11.2015   Patentblatt 2015/48**

(73) Patentinhaber: **Rolls-Royce Deutschland Ltd & Co KG**
**15827 Blankenfelde-Mahlow (DE)**

(72) Erfinder: **GÜMMER, Volker, Dr.**
**85391 Allershausen (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A2- 1 998 049     EP-A2- 2 261 463**

**Beschreibung**

Die Erfindung betrifft eine Schaufelreihengruppe gemäß dem Oberbegriff des Anspruchs 1.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Der Stand der Technik hält für den Fall hoher aerodynamischer Belastung und starken Grenzschichtwachstums auf den Ringkanalseitenwänden (Nabe oder Gehäuse) nur bedingt Lösungen bereit.

Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Derartige Strömungsmaschinen sind beispielsweise aus der EP 2 261 463 A2 und der EP 1 998 049 A2 bekannt. Bei diesen Anordnungen, und insbesondere bei denen, die mehrere direkt benachbarte und relativ zueinander fest angeordnete Schaufelreihen aufweisen (also beispielsweise mehrere Rotorschaufelreihen auf der selben Trommel oder mehrere Statorschaufelreihen), ergeben sich bei höherer aerodynamischer Belastung starke Grenzschichtablösung in der Randzone des Hauptströmungspfades, d. h. an der Naben- oder Gehäusekontur.

Zum Stand der Technik gehören auch doppelreihige Verstellleiträder, deren Schaufeln an Nabe und Gehäuse auf einem Drehteller angeordnet sind, um sie im Anstellwinkel verdrehen zu können. Dabei ist es üblich, aufgrund von Größenrestriktionen für den Drehteller in Umfangsrichtung einen Teilradialspalt vorzusehen, der entlang eines hinteren Teiles des hinteren Profils zu finden ist.

Die Probleme in den Randbereichen sind primär darauf zurückzuführen, dass die in der Mitte des Hauptströmungspfades günstige Anordnung zweier benachbarter Schaufelkanten einer Schaufelreihengruppe zueinander sich in der Nähe der Strömungspfadberandung ungünstig auswirkt. Die erforderliche Strömungsumlenkung kann entweder in Teilen der Schaufelhöhe oder entlang der gesamten Schaufelhöhe schnell so hoch sein, dass die konventionelle Anordnung zu sehr frühzeitiger Ablösung der Grenzschichtströmung in den Randbereichen des Hauptströmungspfades an Naben- und/oder Gehäusewänden führt.

Der vorliegenden Erfindung liegt die Aufgabe zu Grunde, eine Schaufelreihengruppe bereitzustellen, die auch in den Randbereichen des Hauptströmungspfades ein günstiges Strömungsverhalten realisiert.

Diese Aufgabe wird erfindungsgemäß durch eine Schaufelreihengruppe mit den Merkmalen des Anspruchs 1 gelöst.

Danach sieht die erfindungsgemäße Lösung vor, dass eine Schaufelreihengruppe aus mindestens zwei benachbarten und relativ zueinander fest angeordneten Schaufelreihen (die mehrere miteinander rotierende Rotorschaufelreihen oder mehrere Statorschaufelreihen sein können) besteht, wobei zwischen einem Schaufelende mindestens einer Schaufel wenigstens einer der Schaufelreihen der Schaufelreihengruppe und wenigstens einer der beiden Hauptströmungspfadberandungen (Nabe und Gehäuse) ein Spalt vorgesehen ist. Dabei sind die betreffende Schaufel und die betreffende Hauptströmungspfadberandung relativ zueinander fest und unbeweglich angeordnet, wobei sich der besagte Spalt entlang wenigstens eines Teils der Profiltiefe der betreffenden Schaufel entlang der Hauptströmungspfadberandung erstreckt. Hierdurch kann zur Erreichung einer Strömungsbeeinflussung im Bereich der Hauptströmungspfadberandung Fluid von der im Wesentlichen konkaven Schaufeldruckseite zu der im Wesentlichen konvexen Schaufelsaugseite der Schaufel durchtreten.

Die Erfindung beruht somit auf der Erkenntnis, dass durch Bereitstellung eines Spaltes zwischen einer Schaufel und einer Hauptströmungspfadberandung, an der die Schaufel fest angeordnet ist, ein verbessertes Strömungsverhalten in diesem Randbereich des Hauptströmungspfades bereitstellt wird.

Eine Hauptströmungspfadberandung wird radial innen beispielsweise durch eine Nabenkontur und radial außen beispielsweise durch eine Gehäusekontur gebildet, beispielsweise durch eine Wandung oder einen Statorfuß oder ein Statordeckband oder einen Rotorfuß oder ein Rotordeckband oder einen Schaufeldrehteller.

Ferner sieht die erfindungsgemäße Lösung vor, dass an der hinteren Mitgliedsschaufelreihe an wenigstens einem ihrer Schaufelenden ein über einen Teilabschnitt der Profiltiefe reichender Spalt zwischen Schaufel und Hauptströmungspfadberandung vorgesehen ist, der innerhalb eines bis zur Hinterkante reichenden Teilbereiches der Profiltiefe vorgesehen ist.

Ausgestaltungen der Erfindung sind in den Unteransprüchen angegeben. Weitere Ausgestaltungen können wie folgt vorgesehen sein:

Gemäß einer Ausgestaltung der Erfindung ist an der vorderen Mitgliedsschaufelreihe an wenigstens einem ihrer Schaufelenden ein über die gesamte Profiltiefe reichender Spalt zwischen Schaufel und Hauptströmungspfadberandung vorgesehen. Des Weiteren kann vorgesehen sein, dass an der hinteren Mitgliedsschaufelreihe an wenigstens einem ihrer Schaufelenden ein über die gesamte Profiltiefe reichender Spalt zwischen Schaufel und Hauptströmungspfadberandung vorgesehen ist.

Gemäß einer weiteren Ausgestaltung ist an derselben Hauptströmungspfadberandung sowohl an der vorderen Mitgliedsschaufelreihe (i) als auch an der hinteren Mitgliedsschaufelreihe (i+1) ein Spalt oder Teilspalt vorgesehen.

Auch kann vorgesehen sein, dass an derselben Hauptströmungspfadberandung sowohl an der vorderen Mitgliedsschaufelreihe (i) als auch an der hinteren Mitgliedsschaufelreihe (i+1) ein Teilspalt vorgesehen ist.

Weiter kann vorgesehen sein, dass an der vorderen Mitgliedsschaufelreihe (i) ein über einen Teilabschnitt der Profiltiefe reichender Spalt (Teilspalt genannt) an einer Hauptströmungspfadberandung vorgesehen ist, wobei die hintere Mitgliedsschaufelreihe (i+1) an derselben Hauptströmungspfadberandung keinen Spalt aufweist.

Eine weitere Ausgestaltung sieht vor, dass ein Teilspalt im mittleren Bereich der Profiltiefe vorgesehen ist, wobei die Profilschnittfläche durch die Profilstirnfläche zweigeteilt wird, wobei die Profilstirnfläche durch die vordere Grenzlinie lgv und die hintere Grenzlinie lgh eingegrenzt ist, wobei die Einrücktiefe ch von der Hinterkante bis zum Schnittpunkt der Skelettlinie SKL mit der hinteren Grenzlinie lgh in Richtung der Profilsehne Se gemessen wird, und wobei für die Einrücktiefe ch folgende Beziehung gilt:

$$0{,}15 \; < \; (\, cv - ch \,) \; / \; l \; < \; 0{,}55.$$

Dabei kann ein Teilspalt im mittleren Bereich der Profiltiefe der vorderen Mitgliedsschaufelreihe (i) vorgesehen sein, wobei für die Einrücktiefe ch(i) folgende Beziehung gilt: $0{,}15 < (cv(i) - ch(i)) / l(i) < 0{,}55$.

Gemäß einer weiteren Ausgestaltung ist ein Teilspalt an wenigstens einer der Mitgliedsschaufelreihen (i) und (i+1) ausgebildet, wobei sich die Skelettlinie SKL und die Grenzlinie lgv im Punkt S schneiden, wobei im Punkt S die Tangente an die Skelettlinie t_skl und die Tangente an die vordere Grenzlinie t_lgv gegeben sind, wobei von der Tangente t_skl aus in mathematisch positivem Drehsinn zur Tangente t_lgv der Neigungswinkel alpha als Maß für die Ausrichtung der vorderen Grenzlinie relativ zum Hauptströmungsrichtung gegeben ist, wobei Werte des Neigungswinkels im Bereich 20° < alpha < 70° vorgesehen sind. Insbesondere können Werte des Neigungswinkels im Bereich von 35° < alpha < 55° vorgesehen sein.

Eine Ausgestaltung der Erfindung sieht vor, dass im Bereich eines Teilspaltes ein ebener oder gekrümmter Schnitt B-B durch das Schaufelprofil einer der Mitgliedsschaufelreihen (i) und (i+1) gegeben ist, wobei dieser Schnitt senkrecht zu einer infinitesimal klein von der Hauptströmungspfadberandung beabstandeten und durch den Teilspalt verlaufenden u-m-Ebene orientiert ist, wobei im Schnitt B-B an der von der Schaufelsaugseite und der Profilstirnfläche gebildeten Ecke Der Saugseitenpunkt Pss gegeben ist, wobei die effektive Spaltweite e zwischen dem Saugseitenpunkt Pss und der Hauptströmungspfadberandung HB gegeben ist, wobei die effektive Spaltweite e entlang wenigstens einem Teilbereich der Profiltiefe in Richtung der Profilhinterkante zunimmt. Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt. Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit festem oder freiem Schaufelende mit Spalt ausgeführt sein können.

Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad, aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren. Schließlich kann die Strömungsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung wird nachfolgend unter Bezugnahme auf die Figuren der Zeichnung anhand mehrerer Ausführungsbeispiele näher erläutert. Es zeigen:

Fig. 1: mehrere Schaufelreihengruppen nach dem Stand der Technik,

Fig. 2a: eine Übersicht über mehrere Schaufelreihengruppen,

Fig. 2b:     eine Übersicht über weitere Schaufelreihengruppen,

Fig. 3:      die Definition von Meridionalstromlinien,

Fig.4:       eine Prinzipskizze der wandnahen Strömung mit und ohne erfindungsgemäßem Radialspalt,

Fig. 5a:     eine erfindungsgemäße Anordnung zweier Schaufelgruppenmitglieder (i) und (i+1) mit hinterkantenbündigem Teilspalt,

Fig. 5b:     erfindungsgemäße Definitionen an einem randnahen Schaufelstromlinienschnitt in der Ansicht A-A aus Fig.5a,

Fig. 6a:     eine Anordnung zweier Schaufelgruppenmitglieder (i) und (i+1) mit Teilspalt im mittleren Bereich der Profiltiefe,

Fig. 6b:     Definitionen an einem randnahen Schaufelstromlinienschnitt in der Ansicht AA aus Fig.6a,

Fig. 7:      erfindungsgemäße Definitionen der Grenzlinie zwischen Profilschnittfläche und Profilstirnfläche, und

Fig. 8:      eine erfindungsgemäße Definition der Spaltparameter.

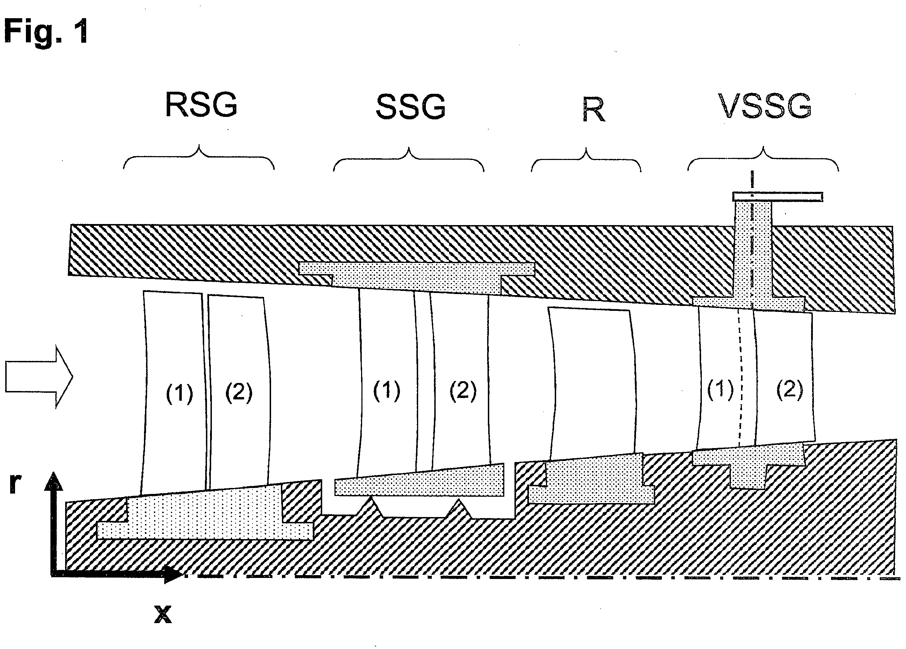

Eine konventionelle Schaufelreihengruppe nach dem Stand der Technik, wie sie in Fig. 1 gezeigt ist, besitzt, sofern keine Relativbewegung zwischen den Enden vorgesehener Schaufeln und der Hauptströmungunspfadberandung HB vorgesehen ist, keinen Spalt zwischen dem Schaufelende und der Hauptströmungunspfadberandung. Hingegen besitzen Rotorschaufelreihengruppen ohne Deckband üblicherweise Laufspalte an ihren äußeren Enden. Ebenso besitzen Statorschaufelreihengruppen ohne Innendeckband üblicherweise Laufspalte an ihren inneren Enden.

Die Fig. 1 zeigt in der durch die Axialrichtung x und die Radialrichtung r gebildeten Meridionalebene mehrere Schaufelreihengruppen, wobei jede der Schaufelreihengruppen aus jeweils zwei gleichartigen und ihre relative Anordnung zueinander (sowohl in Umfangsrichtung als auch in Meridionalrichtung) nicht ändernden Mitgliedsschaufelreihen besteht. Es handelt sich also um doppelreihige Leiträder oder Laufräder.

So besteht eine Rotorschaufelreihengruppe RSG aus zwei mit gleicher Drehgeschwindigkeit laufenden und miteinander verbundenen Rotorschaufelreihen mit einem Laufspalt am Gehäuse; das erste Mitglied der Gruppe ist mit (1) und das zweite Mitglied der Gruppe mit (2) gekennzeichnet.

Eine Statorschaufelreihengruppe SSG besteht aus zwei direkt benachbarten feststehenden Statorschaufelreihen (1) und (2).

Die variable Statorschaufelreihengruppe VSSG besteht aus zwei direkt benachbarten Statorschaufelreihen (1) und (2), wobei jeweils eine Schaufel der vorderen Reihe mit einer Schaufel der hinteren Reihe auf einem gemeinsamen Drehteller vorgesehen sind und auf diese Weise gemeinsam um die Drehachse verstellbar sind.

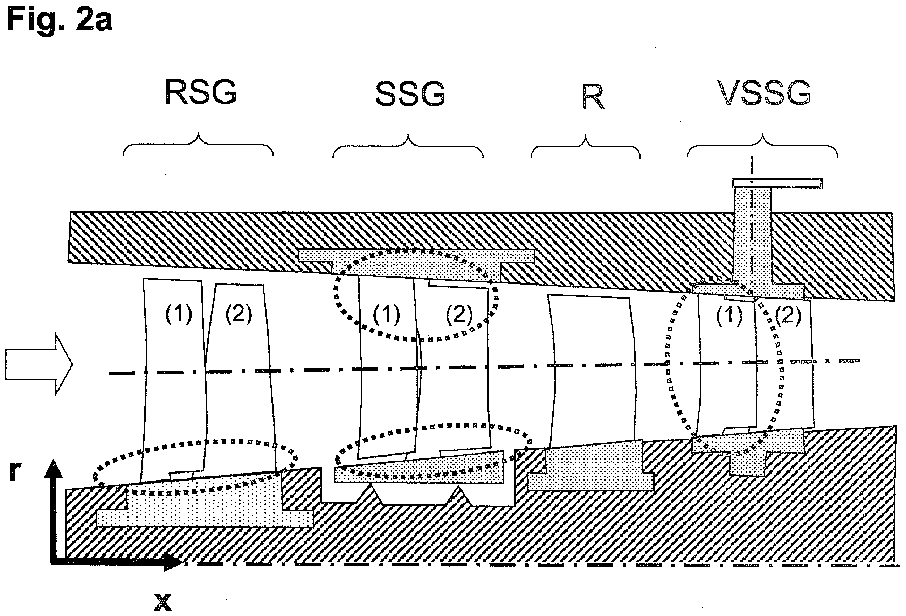

Die Fig. 2a zeigt in der durch die Axialrichtung x und die Radialrichtung r gebildeten Meridionalebene mehrere Schaufelreihengruppen, wobei jede der Schaufelreihengruppen aus jeweils zwei gleichartigen und die Relativposition zueinander nicht ändernden Mitgliedsschaufelreihen besteht.

So besteht eine Rotorschaufelreihengruppe RSG aus mindestens zwei mit gleicher Drehgeschwindigkeit laufenden und miteinander verbundenen Rotorschaufelreihen (1) und (2). Das vordere Schaufelreihenmitglied (1) besitzt einen Teilspalt am Fuß des Rotors.

Eine erfindungsgemäße Statorschaufelreihengruppe SSG besteht aus zwei direkt benachbarten feststehenden Statorschaufelreihen (1) und (2). Das vordere Schaufelreihenmitglied besitzt erfindungsgemäß einen Spalt an der Statornabe, das hintere Schaufelreihenmitglied besitzt erfindungsgemäß einen Teilspalt an der Nabe und am Gehäuse.

Eine variable Statorschaufelreihengruppe VSSG besteht aus zwei direkt benachbarten Statorschaufelreihen (1) und (2). Eine Schaufel einer der Mitgliedsschaufelreihen ist hier mit mindestens einer Schaufel der ihr unmittelbar stromab liegenden Mitgliedsschaufelreihe auf einem gemeinsamen Drehteller vorgesehen. Alternativ können aber auch, wie hier nicht bildlich dargestellt, mindestens zwei, unterschiedlichen Mitgliedsschaufelreihen zugehörige Schaufeln je auf einem individuellen Drehteller angeordnet sein. Das vordere Schaufelreihenmitglied besitzt einen Teilspalt an der Nabe und am Gehäuse.

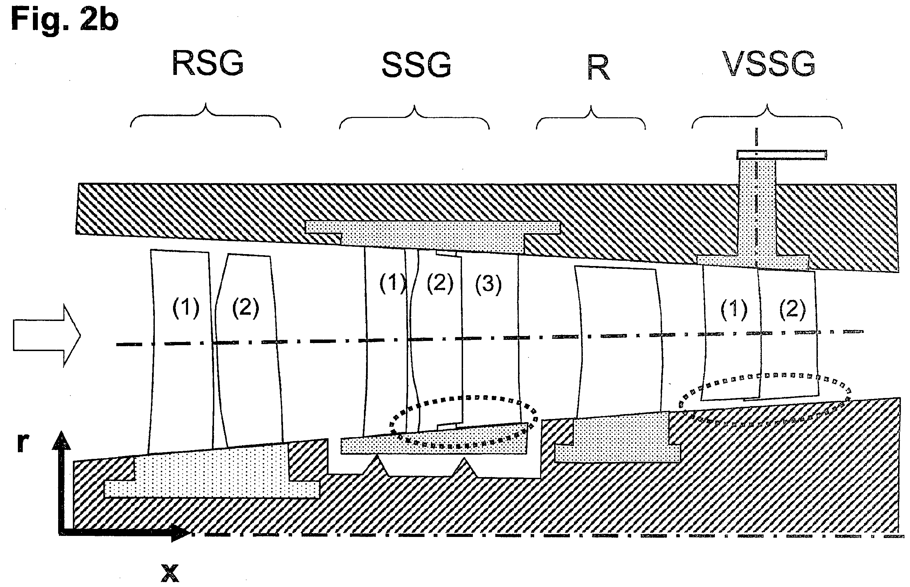

Wie in der Fig. 2b gezeigt, kann die erfindungsgemäße Schaufelreihengruppe auch mehr als zwei Mitgliedsschaufelreihen besitzen, wie hier beispielhaft für die Anzahl 3 an der Statorschaufelreihengruppe SSG dargestellt ist.

Wie hier nicht explizit dargestellt ist, kann auch eine Rotorschaufelreihengruppe RSG oder eine variable Statorschaufelreihengruppe mit mehr als 2 Mitgliedsschaufelreihen versehen sein.

Die beschriebene Konfiguration der Schaufelreihengruppe schließt die Möglichkeit ein, dass an mindestens einer Mitgliedsschaufelreihe der Abstand zwischen zwei benachbarten Schaufeln entlang des Umfangs variiert. Es kann auch günstig sein, wenn die axiale Position zweier benachbarter Schaufeln dieser Schaufelreihe entlang des Umfangs variiert. Es kann auch günstig sein, wenn die Profiltiefe zweier benachbarter Schaufeln dieser Schaufelreihe entlang des Umfangs variiert.

Weiter kann es vorteilhaft sein, wenn die Anzahl der Schaufeln zweier benachbarter Mitgliedsschaufelreihen in einem besonderen Verhältnis stehen, das heißt, dass die Anzahl der Schaufeln der Mitgliedsschaufelreihe (i) ein Vielfaches der Anzahl der Schaufeln der Mitgliedsschaufelreihe (i+1) bildet, oder die Anzahl der Schaufeln der Mitgliedsschaufelreihe (i+1) ein Vielfaches der Anzahl der Schaufeln der Mitgliedsschaufelreihe (i) bildet, oder die Anzahl der Schaufeln der Mitgliedsschaufelreihe (i) und die Anzahl der Schaufeln der Mitgliedsschaufelreihe (i+1) gleich sind.

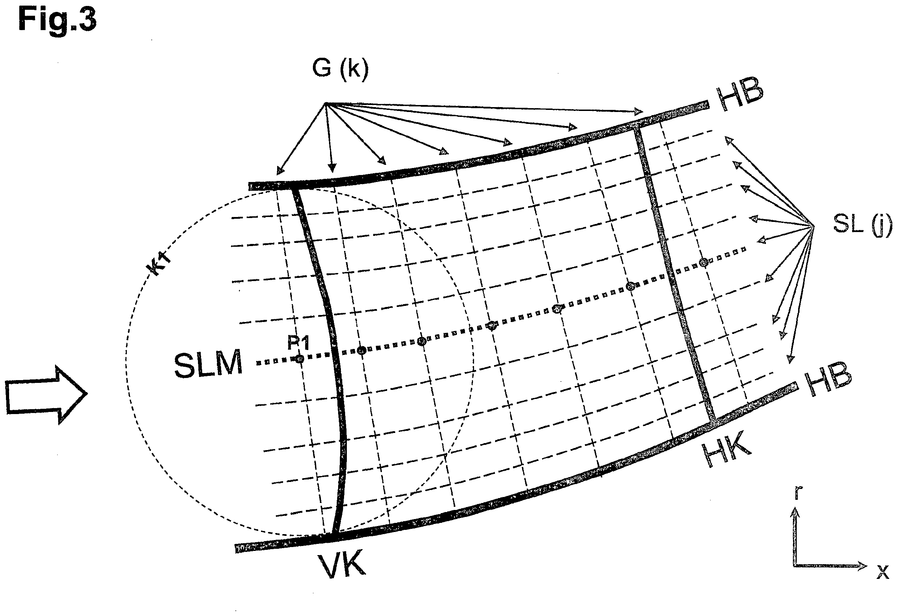

Die Fig. 3 zeigt zur Definition von Meridionalstromlinien einen Hauptströmungspfad einer Strömungsmaschine mit Durchströmung von links nach rechts (angezeigt durch den dicken Pfeil), in der durch die Axialkoordinate x und die Radialkoordinate r gebildeten Meridionalebene, wobei der Hauptströmungspfad durch die radial inneren Hauptströmungspfadberandung N und die radial äußere Hauptströmungspfadberandung G begrenzt wird. Mittig zwischen der radial inneren Hauptströmungspfadberandung N und der radial äußeren Hauptströmungspfadberandung G ist die mittlere Meridionalstromlinie SLM gegeben. Ihr Verlauf entspricht der Verbindung der Mittelpunkte dem Hauptströmungspfad einbeschriebener Kreise, wie im Bild für den ersten markierten Punkt P1 auf der mittleren Meridionalstromlinie SLM und den zugehörigen Kreis K1 beispielhaft verdeutlicht wird. VK und HK bezeichnen die Vorderkante und die Hinterkante einer im Hauptströmungspfad angeordneten Schaufel.

Eine Schar von Geraden G(k) ist innerhalb des Hauptströmungspfades gegeben, deren Mitglieder jeweils senkrecht auf der mittleren Meridionalstromlinie SLM stehen und an den Hauptströmungspfadberandungen HB enden. Weitere Meridionalstromlinien SL(j) sind durch die Verbindung von Punkten bei jeweils gleicher prozentualer Unterteilung der Geraden G(k) zwischen den Hauptströmungspfadberandungen HB definiert. Die Rotation einer Meridionalstromlinie um die Maschinenachse ergibt eine Meridionalstromfläche SF(j). Der Schnitt einer Meridionalstromfläche mit einer Schaufel der Strömungsmaschine ergibt einen Meridionalstromlinienschnitt SLS(j).

Die Hauptströmungspfadberandung HB stellt erfindungsgemäß eine Kontur an der Nabe oder am Gehäuse der Strömungsmaschine dar, zum Beispiel an einem Drehteller, an einer Wandung, an einem Statorfuß, an einem Statordeckband, an einem Rotorfuß oder an einem Rotordeckband.

Die Erfindung sieht vor, dass sich die Hauptströmungspfadberandung HB relativ zur Schaufelreihengruppe betrachtet in Umfangsrichtung der Strömungsmaschine nicht fortbewegt und zwischen wenigstens einem Schaufelende und der Hauptströmungspfadberandung wenigstens entlang eines Teils der Profiltiefe des betreffenden Schaufel ein Spalt entlang der Hauptströmungspfadberandung vor gesehen ist, durch den Fluid von der Schaufeldruckseite zur Schaufelsaugseite hindurchtritt.

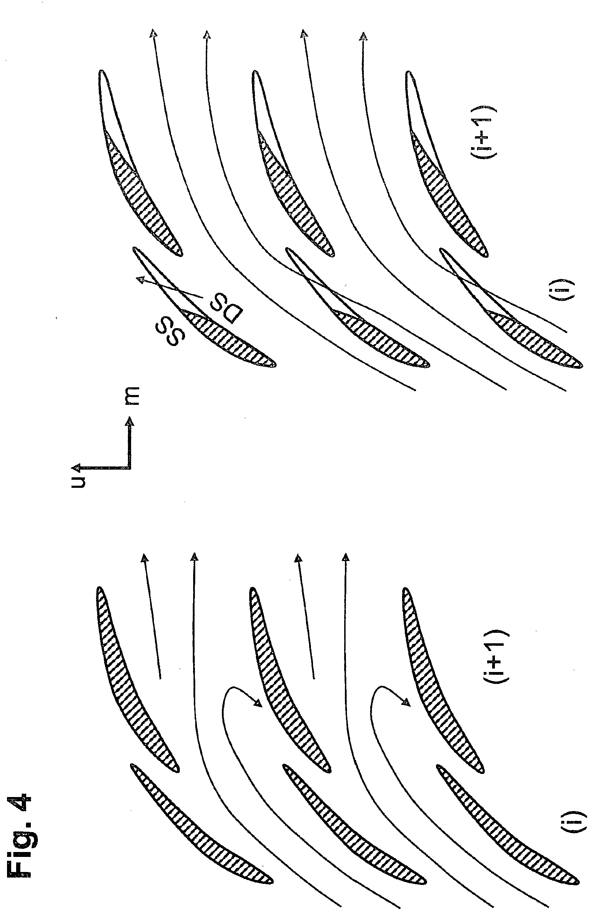

Bei Einzelschaufelreihen mit einem üblichen Maß an Strömungsumlenkung, die in konventionellen Bauweisen realisiert wird, kommt es erfahrungsgemäß durch das Vorsehen von Randspalten zu zusätzlichen Totaldruckverlusten im Bereich der Hauptströmungspfadberandungen, die die Leistungswerte einer Maschine mindern. In Schaufelreihengruppen gemäß der vorliegenden Erfindung hingegen treten per se überproportional hohe Totaldruckverluste aufgrund der besonders starken aerodynamischen Belastung und dem dadurch hervorgerufenen Stagnieren der Wandgrenzschichten innerhalb der Schaufelpassage auf, die sich nur durch eine zusätzliche Beeinflussung, gegeben durch das Überströmen von Fluid durch den erfindungsgemäßen Spalt entlang der Hauptströmungspfadberandung senken lassen. In der Skizze in Fig. 4 ist dies beispielhaft für eine Konfiguration mit Teilspalten verdeutlicht. So ist in der Fig. 4 auf der rechten Bildseite die wandnahe Strömung mit Randspalt dargestellt. Es ist zu erkennen, dass die Strömung durch die Randspalte von der im Wesentlichen konkaven Druckseite DS auf die im Wesentlichen konvexe Saugseite SS der Schaufeln durchtritt.

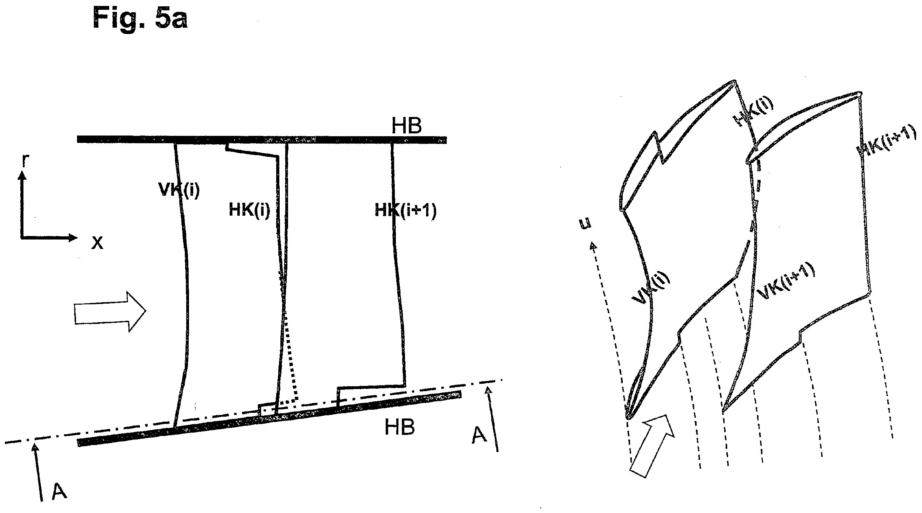

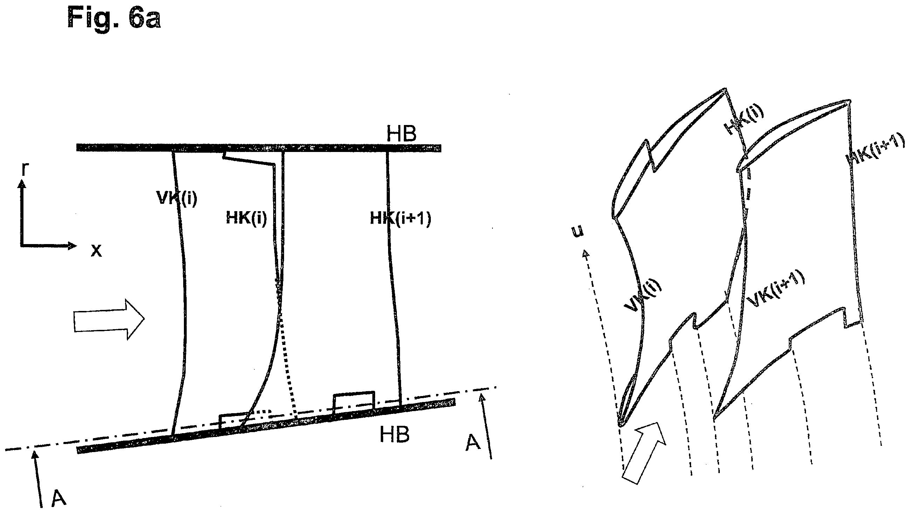

Die Fig. 5a und Fig. 6a zeigen auf der linken Bildseite zwei zu einer erfindungsgemäßen (Fig. 5a) und einer nicht erfindungsgemäßen (Fig. 6a) Schaufelreihengruppe gehörende und benachbarte Mitgliedsschaufelreihen (i) und (i+1) in der durch die Axialrichtung x und die Radialrichtung r gebildeten Meridionalebene, dargestellt zwischen den Hauptströmungspfadberandungen HB, Nabe und Gehäuse. Die rechte Bildseite zeigt eine entsprechende räumliche Darstellung der Schaufelkonfiguration, wobei die gestrichelten Linien in Umfangsrichtung u der Maschine verlaufen. Die Hauptanströmrichtung ist durch einen dicken Pfeil gekennzeichnet. Die erfindungsgemäße Schaufelreihengruppe kann insgesamt mehr als die jeweils dargestellten zwei Mitgliedsschaufelreihen umfassen.

Dargestellt ist die erfindungsgemäße Anordnung zweier benachbarter Mitgliedsschaufelreihen (i) und (i+1) im Bereich zwischen den sie berandenden zwei Hauptströmungspfadberandungen HB. Die Mitgliedsschaufelreihen (i) und (i+1) besitzen jeweils eine Vorderkante VK und eine Hinterkante HK.

Es kann günstig sein, wenn an der vorderen Mitgliedsschaufelreihe (i) an wenigstens einem ihrer Schaufelenden ein über die gesamte Profiltiefe reichender Spalt zwischen Schaufel und Hauptströmungspfadberandung vorgesehen ist; diese Lösung ist in Fig.4 nicht explizit dargestellt.

Alternativ kann es vorteilhaft sein, wenn an der vorderen Mitgliedsschaufelreihe (i) an wenigstens einem ihrer Schaufelenden ein über einen Teilabschnitt der Profiltiefe reichender Spalt, auch Teilspalt genannt, zwischen Schaufel und Hauptströmungspfadberandung vorgesehen ist. Dabei kann es besonders vorteilhaft sein, wenn der Teilspalt innerhalb des mittleren Profilbereiches vorgesehen ist und keine der Vorder- und Hinterkanten berührt, wie in der Fig. 6a dargestellt.

Auch kann es besonders vorteilhaft sein, wenn der Teilspalt innerhalb eines bis zur Hinterkante reichenden Teilbereiches der Profiltiefe vorgesehen ist, wie in der Fig. 5a dargestellt.

Es kann weiter günstig sein, wenn an der hinteren Mitgliedsschaufelreihe (i+1) an wenigstens einem ihrer Schaufelenden ein über die gesamte Profiltiefe reichender Spalt zwischen Schaufel und Hauptströmungspfadberandung vorgesehen ist; diese Lösung ist in Fig.4 nicht explizit dargestellt.

Alternativ kann es vorteilhaft sein, wenn an der hinteren Mitgliedsschaufelreihe (i+1) an wenigstens einem ihrer Schaufelenden ein über einen Teilabschnitt der Profiltiefe reichender Spalt, auch Teilspalt genannt, zwischen Schaufel und Hauptströmungspfadberandung vorgesehen ist. Dabei kann es besonders vorteilhaft sein, wenn der Teilspalt innerhalb des mittleren Profilbereiches vorgesehen ist und keine der Vorder- und Hinterkanten berührt, wie in der Fig. 6a dargestellt.

Auch kann es besonders vorteilhaft sein, wenn der Teilspalt innerhalb eines bis zur Hinterkante reichenden Teilbereiches der Profiltiefe vorgesehen ist, wie in der Fig. 5a dargestellt.

Dabei kann es von weiterem Vorteil sein, wenn an derselben Hauptströmungspfadberandung entsprechend den Fig. 5a, 6a sowohl an der vorderen Mitgliedsschaufelreihe (i) als auch an der hinteren Mitgliedsschaufelreihe (i+1) eine der oben genannten Spaltlösungen vorgesehen ist.

Weiterhin lässt sich ein verbessertes Betriebsverhalten der Schaufelreihengruppe erreichen, wenn an beiden Schaufelenden wenigstens einer der Mitgliedsschaufelreihen eine der oben genannten Typen einer Schaufel-/Spaltkonfiguration vorgesehen ist.

Weiterhin kann es sich vorteilhaft auswirken, wenn an beiden Schaufelenden wenigstens einer der Mitgliedsschaufelreihen derselbe Typ einer Schaufel-/Spaltkonfiguration vorgesehen ist.

Für eine detaillierte Betrachtung der erfindungsgemäßen Geometrie von Teilspalten zeigt die Fig. 5a einen Schnitt A-A, mit dessen Hilfe im Weiteren die Schaufelanordnung beschrieben wird. Der Schnitt A-A verläuft entlang einer Meridionalstromlinie in einem infinitesimal kleinen Abstand von der Hauptströmungspfadberandung, so dass sie einen gegebenen Spalt entlang der Hauptströmungspfadberandung über seine ganze Erstreckung durchdringt und bei Betrachtung des Schnittes A-A in Richtung der Hauptströmungspfadmitte die durch den Spalt geschaffene Stirnfläche einer Schaufel sichtbar ist.

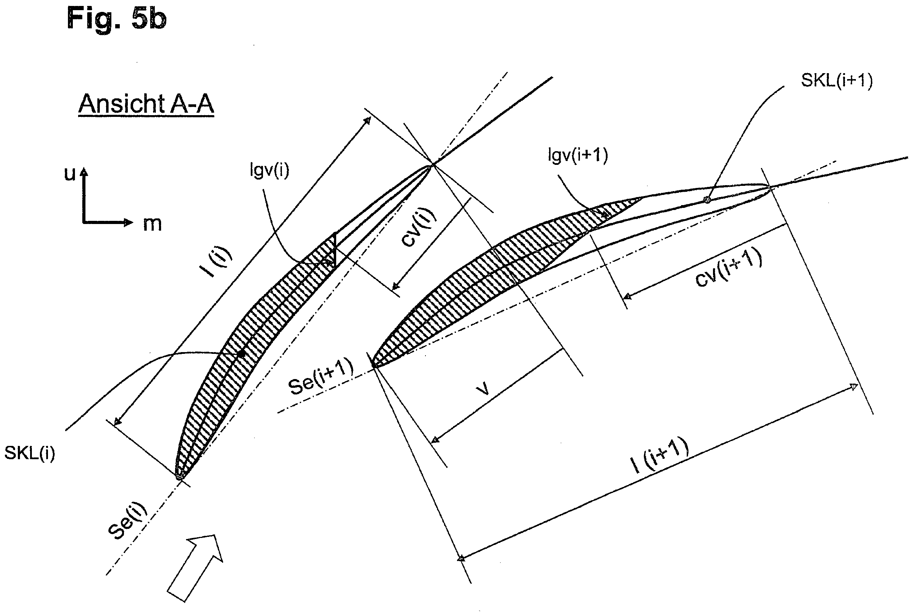

Die Fig. 5b zeigt einen Meridionalstromlinienschaufelschnitt in der Ansicht A-A aus Fig. 5a sowie die Definition verschiedener relevanter Größen in der durch die Meridionalrichtung m und die Umfangskoordinate u gegebenen Ebene. Zur Vereinfachung ist nur jeweils eine Schaufel der Mitgliedsschaufelreihen (i) und (i+1) dargestellt. Es ist hier beispielhaft der Fall dargestellt, dass die Vorderkante des hinteren Schaufelprofils (i+1) in der Nähe der Druckseite und Hinterkante des vorderen Schaufelprofils (i) angeordnet ist. Das Bild zeigt eine besonders wirksame Anordnung mit einem bis zur Hinterkante reichenden Teilspalt an beiden Mitgliedsschaufelreihen. Jedes Schaufelprofil ist dort, wo kein Spalt präsent ist, entsprechend einer Schnittfläche schraffiert dargestellt und die schraffierte Fläche wird im Folgenden als Profilschnittfläche bezeichnet. Das Schaufelprofil der Mitgliedsschaufelreihen (i) und (i+1) ist dort, wo ein Spalt vorgesehen ist, entsprechend einer betrachteten Oberfläche unschraffiert dargestellt und die unschraffierte Fläche wird im Folgenden als Profilstirnfläche bezeichnet. Die Profilschnittfläche ist durch die vordere Grenzlinie lgv von der Profilstirnfläche getrennt.

Die Lage und Form der vorderen Grenzlinie lgv bestimmt wesentlich die Erstreckung des Teilspaltes und ist somit erfindungsgemäß von Bedeutung.

Das Schaufelprofil der Mitgliedsschaufelreihen (i) und (i+1) ist mit seiner im Wesentlichen konvexen Saugseite, seiner im Wesentlichen konkaven Druckseite und seiner mittig zwischen Saug- und Druckseite definierten Skelettlinie SKL dargestellt. Für das vordere Schaufelprofil der Mitgliedsschaufelreihe (i) ergibt sich die zugehörige Profilsehne Se(i) als druckseitige Tangente an das Profil (i). In äquivalenter Weise ergibt sich die Profilsehne Se(i+1) des hinteren Schaufelprofils als druckseitige Tangente an das Profil (i+1).

Zwischen der Saugseite einer Schaufel der Reihe (i+1) und der Druckseite einer Schaufel der Reihe (i) ist ein kleinerer Strömungskanal ausgebildet, der hier als Nebenpassage bezeichnet wird.

Die Profiltiefe des vorderen Schaufelprofils l(i) und die Profiltiefe des hinteren Schaufelprofils l(i+1) werden in der Richtung der jeweiligen Profilsehne, Se(i) bzw. Se(i+1), von der jeweiligen Vorderkante zur jeweiligen Hinterkante gemessen.

Die Teilspalttiefe des vorderen Schaufelprofils cv(i) und die Teilspalttiefe des hinteren Schaufelprofils cv(i+1) werden ebenfalls in Richtung der jeweiligen Profilsehne, Se(i) bzw. Se(i+1), gemessen, und zwar von der jeweiligen Hinterkante bis zum Schnittpunkt der jeweiligen Skelettlinie, SKL(i) bzw. SKL(i+1), mit der jeweiligen Grenzlinie, lgv(i) bzw. lgv(i+1).

Die Nebenpassagenlänge v ist definiert als der Abstand zwischen dem Hinterkantenpunkt der Schaufel (i) und dem Vorderkantenpunkt der Schaufel (i+1), gemessen in Richtung der Tangente an die Skelettlinie im Hinterkantenpunkt der Schaufel (i) und wird stromaufwärts positiv gezählt.

Es ist vorteilhaft, wenn zwischen den Mitgliedsschaufelreihen (i) und (i+1) an einer Hauptströmungspfadberandung eine Nebenpassagenweite v größer Null gegeben ist, gemäß einer bezogenen Nebenpassagenweite von v' = v / l(i) > 0.

Weiterhin vorteilhaft ist es, wenn die bezogene Nebenpassagenweite v' Werte von größer als 0,05 annimmt. Besonders vorteilhaft können dabei Werte von 0,05 < v' < 0,45 sein.

Vorteilhaft ist es, wenn in Kombination mit einem der obigen Werte für v' am selben Schaufelende der Mitgliedsschaufelreihe (i) ein über die gesamte Profiltiefe reichender Radialspalt vorgesehen ist.

Es ist ebenfalls vorteilhaft, wenn in Kombination mit einem der obigen Werte für v' am selben Schaufelende der Mitgliedsschaufelreihe (i) ein im mittleren Bereich der Profiltiefe platzierter Teilspalt vorgesehen ist.

Es ist ebenfalls günstig, wenn in Kombination mit einem der obigen Werte für v' am selben Schaufelende der Mitgliedsschaufelreihe (i) ein innerhalb eines bis zur Hinterkante reichenden Teilbereiches der Profiltiefe platzierter Spalt vorgesehen ist.

Dabei kann es vorteilhaft sein, wenn für die Teilspalttiefe des vorderen Schaufelprofils cv(i) gilt:

$$0,05 \; < \; cv(i) \, / \, l(i) \; < \; 0,75$$

Es ist von weiterem Vorteil, wenn die Teilspalttiefe des vorderen Schaufelprofils cv(i) in einem ausgewählten Verhältnis zur Nebenpassagenlänge v und zur Profiltiefe des vorderen Schaufelprofils l(i) gesetzt wird, gemäß der Regel:

$$( \, v \; + 0,3{*}l(i) \, ) \; / \; l(i) \; - \; 0,3 \; < \; cv(i) \; / \; l(i) \; < \; ( \, v + 0,3{*}l(i) \, ) \; / \; l(i) \; + \; 0,3$$

Weitere Vorteile ergeben sich erfindungsgemäß bei noch engerer Eingrenzung der Teilspalttiefe cv(i), gemäß:

$$( \, v \; + 0,3{*}l(i) \, ) \; / \; l(i) \; - \; 0,15 \; < \; cv(i) \; / \; l(i) \; < \; ( \, v + 0,3{*}l(i) \, ) \; / \; l(i) \; + \; 0,15$$

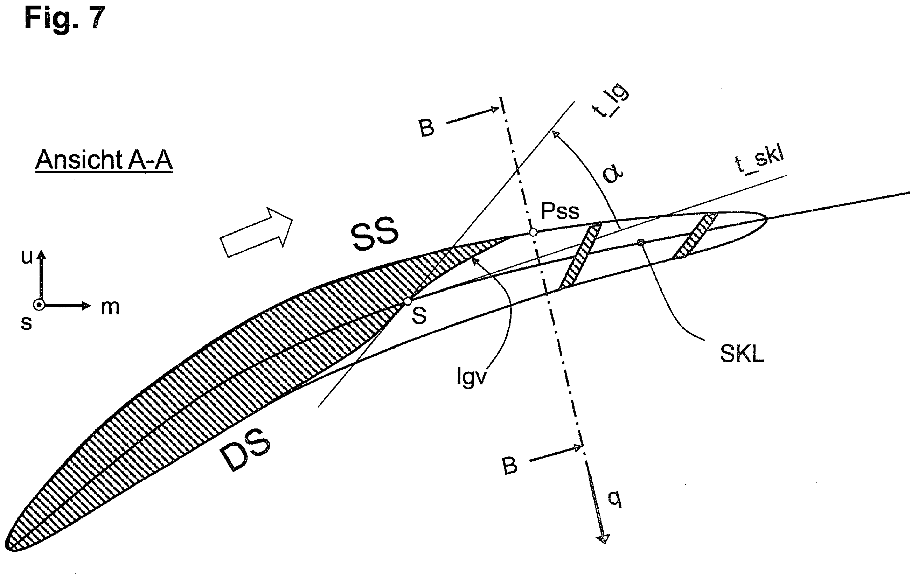

Es ist strömungstechnisch günstig, die vordere Grenzlinie entsprechend einem stumpfen Neigungswinkel alpha<90° geneigt zur Skelettlinie vorzusehen (siehe auch Fig.7).

Es ist vorteilhaft, die Grenzlinie lgv(i) bzw. lgv(i+1) an wenigstens einer der zur Schaufelgruppe gehörigen Mitgliedsschaufelreihen im Wesentlichen oder exakt in Umfangsrichtung u verlaufen zu lassen. Besonders günstig ist eine Vorsehung dieser Lösung an der vorderen Mitgliedsschaufelreihe (i).

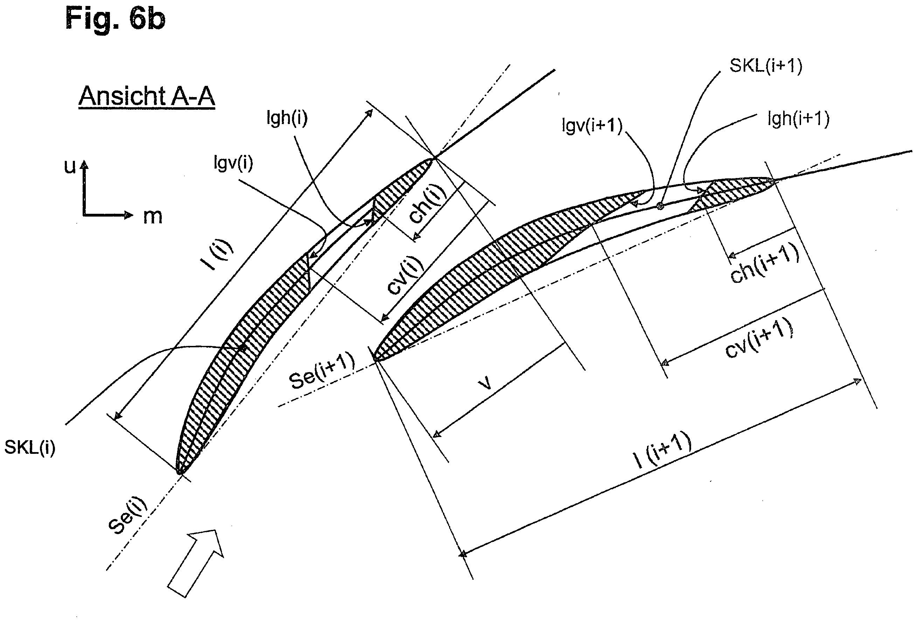

Die Fig. 6b zeigt einen Meridionalstromlinienschaufelschnitt in der Ansicht A-A aus Fig. 6a sowie die Definition verschiedener Größen in der durch die Meridionalrichtung m und die Umfangskoordinate u gegebenen Ebene, ähnlich wie Fig. 5a. Das Bild zeigt eine günstige Anordnung mit einem im mittleren Bereich der Profiltiefe angeordneten Teilspalt an beiden Mitgliedsschaufelreihen. Jedes Schaufelprofil ist dort, wo kein Spalt präsent ist, entsprechend einer Schnittfläche schraffiert dargestellt und die schraffierte Fläche wird im Folgenden als Profilschnittfläche bezeichnet. Das Schaufelprofil der Mitgliedsschaufelreihen (i) und (i+1) ist dort, wo ein Spalt vorgesehen ist, entsprechend einer betrachteten Oberfläche unschraffiert dargestellt und die unschraffierte Fläche wird im Folgenden als Profilstirnfläche bezeichnet. Die Profilschnittfläche wird durch die Profilstirnfläche unterbrochen, eingegrenzt durch die vordere Grenzlinie lgv und die hintere Grenzlinie lgh.

Die Lage und Form der Grenzlinien bestimmt wesentlich die Erstreckung des Teilspaltes und ist somit von Bedeutung.

Die Einrücktiefe des vorderen Schaufelprofils ch(i) und die Einrücktiefe des hinteren Schaufelprofils ch(i+1) werden ebenfalls in Richtung der jeweiligen Profilsehne, Se(i) bzw. Se(i+1), gemessen, und zwar von der jeweiligen Hinterkante bis zum Schnittpunkt der jeweiligen Skelettlinie, SKL(i) bzw. SKL(i+1), mit der jeweiligen Grenzlinie, lgh(i) bzw. lgh(i+1).

Es ist vorteilhaft, wenn in Kombination mit einem der obigen Werte für v' am selben Schaufelende der Mitgliedsschaufelreihe (i) ein im mittleren Bereich der Profiltiefe platzierter Teilspalt vorgesehen ist.

Dabei ist es besonders vorteilhaft, wenn für die Einrücktiefe wenigstens eines der Schaufelprofile ch gilt:

$$0,15 \; < \; ( \, cv \, \text{-} \, ch \, ) \; / \; l \; < \; 0,55$$

Dabei ist es besonders vorteilhaft, wenn für die Einrücktiefe des vorderen Schaufelprofils ch(i) gilt:

$$0,15 \; < \; (\, cv(i) - ch(i) \,) \; / \; l(i) \; < \; 0,55$$

Schließlich kann es vorteilhaft sein, innerhalb des Bereiches zwischen der vorderen Grenzlinie lgv und der Hinterkante wenigstens eine strömungsprofil-, steg- oder lamellenartige Unterbrechung vorzusehen, die lokal Verbindung zur Hauptströmungspfadberandung hat und den Teilspalt weiter unterteilt, siehe Fig. 7. Dies gilt sowohl für die beschriebene Variante mit Teilspalt im mittleren Profilbereich als auch für die erfindungsgemäße Variante mit Teilspalt angrenzend an die Hinterkante.

Die Fig. 7 zeigt weitere Details zur Form der vorderen Grenzlinie lgv, hier allgemeingültig ohne Festschreibung auf eine bestimmte Mitgliedsschaufelreihe. Dargestellt ist ein Schaufelprofil in der Ansicht A-A aus Fig.5a, das im Folgenden Beschriebene gilt aber ebenfalls für Anordnungen ähnlich der Ansicht A-A aus Fig.6a.

Das Schaufelprofil besitzt eine Skelettlinie SKL, die mittig zwischen Profildruckseite und Profilsaugseite verläuft. Ebenfalls erkennbar ist die Grenzlinie lgv zwischen der Profilschnittfläche und der Profilstirnfläche. Die Skelettlinie SKL und die Grenzlinie lgv schneiden sich im Punkt S.

Die im Punkt S an die Skelettlinie SKL angelegte Tangente ist ebenfalls eingezeichnet und mit t_skf gekennzeichnet. Die im Punkt S an die Grenzlinie lgv angelegte Tangente ist ebenfalls eingezeichnet und mit t_lgv gekennzeichnet. Der von der Tangente t_skl aus in mathematisch positivem Drehsinn bis zur Tangente t_lgv gemessene Neigungswinkel alpha ist ein Maß für die Ausrichtung der vorderen Grenzlinie relativ zur Hauptströmungsrichtung; kleine Werte von alpha beschreiben kleine Abweichungen der Grenzlinie von der Hauptströmungsrichtung.

Daher ist es vorteilhaft, Werte des Neigungswinkels von 20° < alpha < 70° vorzusehen. Weiterhin vorteilhaft kann sich ein Wertebereich des Neigungswinkels von 35° < alpha < 55° auswirken.

Ebenfalls vorteilhaft ist es, die Grenzlinie lgv auf wenigstens einem Teil des Verlaufes zwischen ihrem Punkt an der Profildruckseite und dem Punkt S bezüglich der Profilstirnfläche konvex zu gestalten, um einen strömungsgünstigen Übergang zwischen Profildruckseite und Grenzlinie zu realisieren.

Besonders günstig ist es, die Grenzlinie im gesamten Verlauf zwischen ihrem Punkt an der Profildruckseite und dem Punkt S bezüglich der Profilstirnfläche konvex zu gestalten. Weiterhin vorteilhaft kann es sein, wenn sich die Grenzlinie lgv im Wesentlichen oder exakt tangential aus der Druckseite heraus entwickelt.

Des Weiteren ist ein Schnitt B-B eingezeichnet, der senkrecht zu der durch Meridionalkoordinate m und Umfangskoordinate u gebildeten Ebene (in Richtung der Koordinate s) sowie senkrecht zu Profilskelettlinie SKL (in Richtung der Koordinate q) angeordnet ist. Der Schnitt B-B kann an jedem Punkt der Skelettlinie betrachtet werden, wobei die im Schnitt B-B definierten Größen entlang der Skelettlinie bzw. entlang einer der Profilseiten (SS, DS) variieren können. Der Saugseitenpunkt des Profils in der Ebene B-B ist mit Pss bezeichnet.

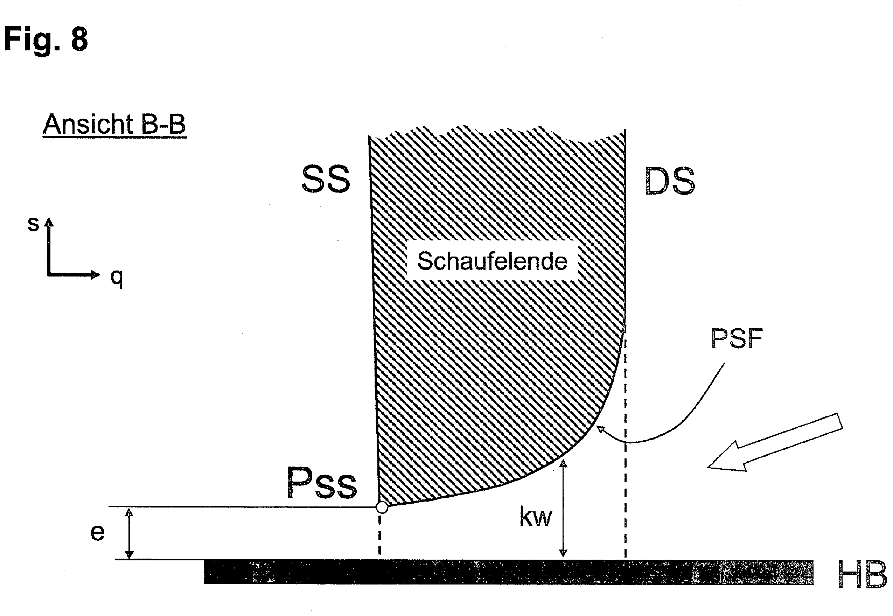

Die Fig. 8 zeigt das Schaufelende einer Mitgliedsschaufelreihe der Schaufelreihengruppe in dem in Fig. 7 eingezeichneten Schnitt B-B, gegeben als die durch die Koordinaten s und q gebildeten Ebene. Die Fixierung des Schnittes B-B auf die s-q-Ebene ist beispielhaft und hier einer klaren Darstellung wegen gewählt. Die folgende Beschreibung gilt gleichermaßen für andere und ggf. auch gekrümmte Schnitte durch das Schaufelprofil, sofern der gewählte Schnitt senkrecht zur m-u-Ebene orientiert ist.

Die Hauptströmungspfadberandung ist mit HB gekennzeichnet. Die effektive Spaltweite e wird erfindungsgemäß in Richtung der Koordinate s zwischen dem Saugseitenpunkt Pss und der Hauptströmungspfadberandung HB gemessen. Die effektive Spaltweite e bestimmt im Wesentlichen die Menge des lokal von Druck- zu Saugseite durch den Spalt strömenden Fluids, sodass der Verlauf der effektiven Spaltweite e entlang des Profils zur Strömungsbeeinflussung herangezogen werden kann.

Es kann günstig sein, wenn die effektive Spaltweite e entlang der Profiltiefe in Richtung der Profilhinterkante im Wesentlichen oder exakt konstant verläuft. Es kann ebenfalls von Vorteil sein, wenn die effektive Spaltweite e in wenigstens einem Teilbereich der Profiltiefe in Richtung der Profilhinterkante variiert.

Es kann dabei von Vorteil sein, wenn die effektive Spaltweite e in wenigstens einem Teilbereich der Profiltiefe in Richtung der Profilhinterkante zunimmt. Es kann weiterhin vorteilhaft sein, wenn die effektive Spaltweite e entlang der Profiltiefe in Richtung der Profilhinterkante kontinuierlich zunimmt.

Aufgrund des Spaltes ergibt sich zwischen der Profilstirnfläche PSF und der Hauptströmungspfadberandung HB ein Strömungskanal. Es kann vorteilhaft sein, wenn im Schnitt B-B die Profilstirnfläche wenigstens im Übergangsbereich zur Profildruckseite konvex (zum Strömungsfeld hin) gestaltet ist, um eine gute Strömungsführung zu erlauben, wie in der Fig. 8 dargestellt.

Die Kanalweite kw wird zwischen der Profilstirnfläche PSF und der Hauptströmungspfadberandung HB senkrecht zur Hauptströmungspfadberandung gemessen. Es kann vorteilhaft sein, wenn die Kanalweite kw in Richtung der Profilsaugseite SS in wenigstens einem Teil des Kanals abnimmt.

Es kann weiterhin vorteilhaft sein, wenn die örtliche Kanalweite kw stets größergleich der effektiven Spaltweite e bleibt.

Es kann weiterhin vorteilhaft sein, wenn die örtliche Kanalweite kw von der Druckseite DS zur Saugseite SS kontinuierlich (und gegebenenfalls degressiv) abnimmt.

Die Erfindung beschränkt sich in ihrer Ausgestaltung nicht auf die vorstehend erläuterten Ausführungsbeispiele, die lediglich beispielhaft zu verstehen sind. Beispielsweise kann der erfindungsgemäß vorgesehene Spalt in anderer Weise und in anderer Form als dargestellt ausgebildet sein.

## Patentansprüche

1. Schaufelreihengruppe anordbar in einem Hauptströmungspfad einer Strömungsmaschine und bestehend aus N benachbarten und sowohl in Meridionalrichtung (m) als auch in Umfangsrichtung (u) relativ zueinander fest angeordneten Mitgliedsschaufelreihen, wobei die Anzahl N der Mitgliedsschaufelreihen größer gleich 2 ist und (i) den Laufindex mit Werten zwischen 1 und N kennzeichnet, wobei eine vordere Mitgliedsschaufelreihe (i) sowie eine hintere Mitgliedsschaufelreihe (i+1) gegeben sind, und wobei die Schaufelreihengruppe zwei Hauptströmungspfadberandungen (HB) aufweist,
**dadurch gekennzeichnet,**
**dass** zwischen einem Schaufelende mindestens einer Schaufel wenigstens einer der Mitgliedsschaufelreihen und wenigstens einer der beiden Hauptströmungspfadberandungen (HB) ein Spalt vorgesehen ist, wobei die betreffende Schaufel und die betreffende Hauptströmungspfadberandung (HB) relativ zueinander in Umfangsrichtung unbeweglich angeordnet sind, und wobei sich der Spalt entlang wenigstens eines Teils der Profiltiefe der betreffenden Schaufel entlang der Hauptströmungspfadberandung (HB) erstreckt, und an der hinteren Mitgliedsschaufelreihe (i+1) an wenigstens einem ihrer Schaufelenden ein über einen Teilabschnitt der Profiltiefe reichender Spalt zwischen Schaufel und Hauptströmungspfadberandung vorgesehen ist, der innerhalb eines bis zur Hinterkante reichenden Teilbereiches der Profiltiefe vorgesehen ist.

2. Schaufelreihengruppe nach Anspruch 1, **dadurch gekennzeichnet, dass** an der vorderen Mitgliedsschaufelreihe (i) an wenigstens einem ihrer Schaufelenden ein über einen Teilabschnitt der Profiltiefe reichender Spalt zwischen Schaufel und Hauptströmungspfadberandung vorgesehen ist.

3. Schaufelreihengruppe nach Anspruch 2, **dadurch gekennzeichnet, dass** der Teilspalt innerhalb des mittleren Profilbereiches vorgesehen ist und keine der Vorder- und Hinterkanten berührt.

4. Schaufelreihengruppe nach Anspruch 2, **dadurch gekennzeichnet, dass** der Teilspalt innerhalb eines bis zur Hinterkante reichenden Teilbereiches der Profiltiefe vorgesehen ist.

5. Schaufelreihengruppe nach einem der vorangehenden Ansprüche, **dadurch gekennzeichnet, dass** an beiden Schaufelenden wenigstens einer der Mitgliedsschaufelreihen ein über einen Teilabschnitt der jeweiligen Profiltiefe reichender Spalt zwischen Schaufel und Hauptströmungspfadberandung vorgesehen ist.

6. Schaufelreihengruppe nach einem der vorangehenden Ansprüche, **dadurch gekennzeichnet, dass** wenigstens an der vorderen Mitgliedsschaufelreihe (i) ein Spalt oder Teilspalt an der Hauptströmungspfadberandung vorgesehen ist und bei Betrachtung der Schaufelanordnung an dieser Hauptströmungspfadberandung in einem infinitesimal klein von der Hauptströmungspfadberandung beabstandeten Meridionalstromlinienschnitt (u-m Ebene) die Vorderkante des hinteren Schaufelprofils der Reihe (i+1) in der Nähe der Druckseite und der Hinterkante des vorderen Schaufelprofils der Reihe (i) angeordnet ist, wobei zwischen der Druckseite des vorderen Schaufelprofils der Reihe (i) und der Saugseite des hinteren Schaufelprofils der Reihe (i+1) eine Nebenpassage ausgebildet ist, wobei die Nebenpassagenlänge v als der Abstand zwischen dem Hinterkantenpunkt der Schaufel (i) und dem Vorderkantenpunkt der Schaufel (i+1) in Richtung der Tangente an die Skelettlinie im Hinterkantenpunkt der Schaufel (i) gegeben ist und stromaufwärts positiv gemessen wird, wobei die Nebenpassagenlänge v bezogen auf die Sehnenlänge l(i) der vorderen Mitgliedsschaufelreihe Werte von größer Null aufweist, gemäß v / l(i) > 0.

7. Schaufelreihengruppe nach einem der vorangehenden Ansprüche, **dadurch gekennzeichnet, dass** ein Teilspalt an wenigstens einer der Mitgliedsschaufelreihe (i) oder (i+1) gegeben ist, wobei bei Betrachtung der Schaufelanordnung in einem infinitesimal klein von der Hauptströmungspfadberandung beabstandeten Meridionalstromlinienschnitt (u-m Ebene) im Bereich ohne Spalt eine Profilschnittfläche und im Bereich mit Spalt eine Profilstirnfläche gegeben sind, wobei die Profilschnittfläche durch die vordere Grenzlinie lgv von der Profilstirnfläche getrennt ist, wobei in jedem Schaufelprofil mittig zwischen Saug- und Druckseite verlaufend eine Skelettlinie SKL definiert ist, wobei die Profilsehne Se als jeweilige druckseitige Tangente an das Profil gegeben ist, wobei die Profiltiefe l in Richtung der jeweiligen Profilsehne Se von der jeweiligen Vorderkante zur jeweiligen Hinterkante gemessen wird, wobei die jeweilige Teilspalttiefe cv in Richtung der jeweiligen Profilsehne von der jeweiligen Hinterkante bis zum Schnittpunkt der jeweiligen Skelettlinie mit der jeweiligen vorderen Grenzlinie lgv gemessen wird, wobei die Teilspalttiefe cv gemäß 0,05 < cv / l < 0,75 festgelegt ist.

8.  Schaufelreihengruppe nach einem der vorangehenden Ansprüche, **dadurch gekennzeichnet, dass** an der vorderen Mitgliedsschaufelreihe (i) ein Teilspalt vorgesehen ist und die Teilspalttiefe des vorderen Schaufelprofils cv(i) in einem ausgewählten Verhältnis zur Nebenpassagenlänge v und zur Profiltiefe des vorderen Schaufelprofils l(i) gesetzt ist, gemäß der Regel: (v + 0,3*l(i) ) / l(i) - 0,3 < cv(i) / l(i) < (v + 0,3*l(i)) / l(i) + 0,3.

9.  Schaufelreihengruppe nach einem der vorangehenden Ansprüche, **dadurch gekennzeichnet, dass** ein Teilspalt an wenigstens einer der Mitgliedsschaufelreihen (i) und (i+1) ausgebildet ist, wobei innerhalb des Bereiches zwischen der vorderen Grenzlinie lgv und der Hinterkante wenigstens eine strömungsprofil-, steg- oder lamellenartige Unterbrechung vorgesehen ist, die örtlich Verbindung zur Hauptströmungspfadberandung hat und den Teilspalt unterteilt.

10. Schaufelreihengruppe nach einem der vorangehenden Ansprüche, **dadurch gekennzeichnet, dass** ein Teilspalt an wenigstens einer der Mitgliedsschaufelreihen (i) und (i+1) ausgebildet ist, wobei die Grenzlinie auf wenigstens einem Teil des Verlaufes zwischen ihrem Punkt an der Profildruckseite und dem Punkt S bezüglich der Profilstirnfläche konvex gekrümmt gestaltet ist, um einen strömungsgünstigen Übergang zwischen Profildruckseite und Grenzlinie zu realisieren.

11. Schaufelreihengruppe nach einem der vorangehenden Ansprüche, **dadurch gekennzeichnet, dass** im Bereich eines Teilspaltes ein ebener oder gekrümmter Schnitt B-B durch das Schaufelprofil einer der Mitgliedsschaufelreihen (i) und (i+1) gegeben ist, wobei dieser Schnitt senkrecht zu einer infinitesimal klein von der Hauptströmungspfadberandung beabstandeten und durch den Teilspalt verlaufenden u-m-Ebene orientiert ist, wobei im Schnitt B-B aufgrund des Spaltes zwischen der Profilstirnfläche und der Hauptströmungspfadberandung ein Strömungskanal gegeben ist, wobei die Profilstirnfläche wenistens im Übergangsbereich zur Profildruckseite zum Strömungsfeld hin konvex gekrümmt ist.

12. Schaufelreihengruppe nach einem der vorangehenden Ansprüche, **dadurch gekennzeichnet, dass** im Bereich eines Teilspaltes ein ebener oder gekrümmter Schnitt B-B durch das Schaufelprofil einer der Mitgliedsschaufelreihen (i) und (i+1) gegeben ist, wobei dieser Schnitt senkrecht zu einer infinitesimal klein von der Hauptströmungspfadberandung beabstandeten und durch den Teilspalt verlaufenden u-m-Ebene orientiert ist, wobei im Schnitt B-B aufgrund des Spaltes zwischen der Profilstirnfläche und der Hauptströmungspfadberandung ein Strömungskanal gegeben ist, wobei die Kanalweite kw zwischen der Profilstirnfläche und der Hauptströmungspfadberandung senkrecht zur Hauptströmungspfadberandung gemessen wird, wobei die Kanalweite kw in Richtung der Profilsaugseite in wenigstens einem Teil des Strömungskanals abnimmt.

**Claims**

1.  Blade row group arrangeable in a main flow path of a fluid-flow machine and consisting of N adjacent member blade rows firmly arranged relative to one another in both the meridional direction (m) and the circumferential direction (u), with the number N of the member blade rows being greater than/ equal to 2 and (i) designating the running index with values between 1 and N, with a front member blade row (i) as well as a rear member blade row (i+1) being provided, and with the blade row group having two main flow path boundaries (HB), **characterized in that** a gap is provided between one blade end of at least one blade of at least one of the member blade rows and at least one of the two main flow path boundaries (HB), where the blade in question and the main flow path boundary (HB) in question are arranged immovable relative to one another in the circumferential direction, and where said gap extends along at least part of the profile depth of the blade in question along the main flow path boundary (HB), and a gap extending over a partial section of the profile depth is provided on the rear member blade row (i+1) on at least one of its blade ends between blade and main flow path boundary, the partial gap is provided inside a partial area of the profile depth extending up to the trailing edge.

2.  Blade row group in accordance with Claim 1, **characterized in that** a gap extending over a partial section of the profile depth is provided on the front member blade row (i) on at least one of its blade ends between blade and main flow path boundary.

3.  Blade row group in accordance with Claim 2, **characterized in that** the partial gap is provided inside the center profile area and does not touch any of the leading and trailing edges.

4. Blade row group in accordance with Claim 2, **characterized in that** the partial gap is provided inside a partial area of the profile depth extending up to the trailing edge.

5. Blade row group in accordance with one of the preceding Claims, **characterized in that** on both blade ends of at least one of the member blade rows a gap extending over a partial section of the respective profile depth is provided between blade and main flow path boundary.

6. Blade row group in accordance with one of the preceding Claims, **characterized in that** at least on the front member blade row (i) a gap or partial gap is provided at the main flow path boundary and, when viewing the blade arrangement at this main flow path boundary in a meridional flow line section (u-m plane) extending at an infinitesimally small distance from the main flow path boundary, the leading edge of the rear blade profile of the row (i+1) is arranged in the vicinity of the pressure side and the trailing edge of the front blade profile of the row (i), where a secondary passage is formed between the pressure side of the front blade profile of the row (i) and the suction side of the rear blade profile of the row (i+1), where the secondary passage length v is defined as the distance between the trailing edge point of the blade (i) and the leading edge point of the blade (i+1) in the direction of the tangent on the skeleton line at the trailing edge point of the blade (i), and is measured positively upstream, where the secondary passage length v, relative to the chord length $l(i)$ of the front member blade row has values greater than zero, in accordance with $v / l(i) > 0$.

7. Blade row group in accordance with one of the preceding Claims, **characterized in that** a partial gap is provided on at least one of the member blade rows (i) or (i+1), where, when viewing the blade arrangement in a meridional flow line section (u-m plane) extending at an infinitesimally small distance from the main flow path boundary, in the area without gap a profile section face and in the area with gap a profile end face are provided, where the profile section face is separated from the profile end face by the front limit line lgv, where a skeleton line SKL is defined in each blade profile in the middle between the suction side and the pressure side, where the profile chord Se is defined as the respective pressure-side tangent on the profile, where the profile depth l is measured in the direction of the respective profile chord Se from the respective leading edge to the respective trailing edge, where the respective partial gap depth cv is measured in the direction of the respective profile chord from the respective trailing edge to the intersection point of the respective skeleton line with the respective front limit line lgv, where the partial gap depth cv is defined in accordance with $0.05 < cv / l < 0.75$.

8. Blade row group in accordance with one of the preceding Claims, **characterized in that** a partial gap is provided on the front member blade row (i), and the partial gap depth $cv(i)$ of the front blade profile is set at a selected ratio to the secondary passage length v and to the profile depth of the front blade profile $l(i)$, in accordance with the rule: $(v + 0.3*l(i)) / l(i) - 0.3 < cv(i) / l(i) < (v + 0.3*l(i)) / l(i) + 0.3$.

9. Blade row group in accordance with one of the preceding Claims, **characterized in that** a partial gap is formed on at least one of the member blade rows (i) and (i+1), where in the area between the front limit line lgv and the trailing edge, at least one flow profile-like, web-like or lamella-like break is provided, said break having a local connection to the main flow path boundary and dividing the partial gap.

10. Blade row group in accordance with one of the preceding Claims, **characterized in that** a partial gap is formed on at least one of the member blade rows (i) and (i+1), where the limit line on at least part of its course between its point on the profile pressure side and the point S relative to the profile end face is designed convex, in order to obtain a transition which is favourable in terms of flow between the profile pressure side and the limit line.

11. Blade row group in accordance with one of the preceding Claims, **characterized in that** in the area of a partial gap, a flat or curved section B-B through the blade profile of one of the member blade rows (i) and (i+1) is provided, where this section is oriented perpendicular to a u-m plane extending at an infinitesimally small distance from the main flow path boundary and passing through the partial gap, where in the section B-B due to the gap, a flow duct is present between the profile end face and the main flow path boundary, where the profile end face is designed convex at least in the transitional area towards the profile pressure side (towards the flow field).

12. Blade row group in accordance with one of the preceding Claims, **characterized in that** in the area of a partial gap, a flat or curved section B-B through the blade profile of one of the member blade rows (i) and (i+1) is provided, where this section is oriented perpendicular to a u-m plane extending at an infinitesimally small distance from the main flow path boundary and passing through the partial gap, where in the section B-B due to the gap, a flow duct is present between the profile end face and the main flow path boundary, where the duct width kw is measured between the profile end face and the main flow path boundary perpendicular to said main flow path boundary, where the duct width kw decreases in the direction of the profile suction side in at least a part of the flow duct.

**Revendications**

1. Groupe de rangées d'aubes pouvant être placé dans une voie d'écoulement principale d'une machine à écoulement et constitué de N rangées d'aubes membres adjacentes agencées de manière fixe les unes par rapport aux autres tant dans la direction méridienne (m) que dans la direction circonférentielle (u), sachant que le nombre N des rangées d'aubes membres est supérieur/égal à 2 et (i) caractérise l'indice courant avec des valeurs comprises entre 1 et N, sachant que sont présentes une rangée d'aubes membre avant (i) et une rangée d'aubes membre arrière (i+1), et que le groupe de rangées d'aubes présente deux bords de voie d'écoulement principale (HB), **caractérisé en ce qu'**entre une extrémité d'aube d'au moins une aube d'au moins une des rangées d'aubes membres et au moins un des deux bords de voie d'écoulement principale (HB) est prévue une fente, sachant que l'aube concernée et le bord concerné de voie d'écoulement principale (HB) sont agencés de manière immobile l'un par rapport à l'autre dans la direction circonférentielle, et que ladite fente s'étend le long d'au moins une partie de la profondeur de profil de l'aube concernée le long du bord de voie d'écoulement principale (HB) et sur la rangée d'aubes membre arrière (i+1) à au moins l'une de ses extrémités d'aube est prévue une fente entre aube et bord de voie d'écoulement principale s'étendant sur une section partielle de la profondeur de profil, et la fente partielle est prévue à l'intérieur d'une zone partielle de la profondeur de profil s'étendant jusqu'au bord de fuite.

2. Groupe de rangées d'aubes selon la revendication n° 1, **caractérisé en ce que** sur la rangée d'aubes membre avant (i) à au moins l'une de ses extrémités d'aube est prévue une fente entre aube et bord de voie d'écoulement principale s'étendant sur une section partielle de la profondeur de profil.

3. Groupe de rangées d'aubes selon la revendication n° 2, **caractérisé en ce que** la fente partielle est prévue à l'intérieur de la zone de profil médiane et ne touche aucun des bords d'attaque et de fuite.

4. Groupe de rangées d'aubes selon la revendication n° 2, **caractérisé en ce que** la fente partielle est prévue à l'intérieur d'une zone partielle de la profondeur de profil s'étendant jusqu'au bord de fuite.

5. Groupe de rangées d'aubes selon une des revendications précédentes, **caractérisé en ce qu'**aux deux extrémités d'aube d'au moins une des rangées d'aubes membres est prévue une fente entre aube et bord de voie d'écoulement principale s'étendant sur une section partielle de la profondeur de profil respective.

6. Groupe de rangées d'aubes selon une des revendications précédentes, **caractérisé en ce qu'**au moins sur la rangée d'aubes membre avant (i) est prévue une fente ou une fente partielle sur le bord de voie d'écoulement principale, et qu'en observant l'agencement d'aubes sur ce bord de voie d'écoulement principale dans une coupe de ligne d'écoulement méridienne (plan u-m) située à une distance infinitésimalement petite du bord de voie d'écoulement principale, le bord d'attaque du profil d'aube arrière de la rangée (i+1) est placé à proximité du côté refoulement et du bord de fuite du profil d'aube avant de la rangée (i), sachant qu'entre le côté refoulement du profil d'aube avant de la rangée (i) et le côté aspiration du profil d'aube arrière de la rangée (i+1) est formé un passage secondaire, que la longueur v du passage secondaire est donnée par la distance entre le point de bord de fuite de l'aube (i) et le point de bord d'attaque de l'aube (i+1) en direction de la tangente à la ligne moyenne au point de bord de fuite de l'aube (i) et est mesurée positivement vers l'amont, la longueur v du passage secondaire rapportée à la longueur de corde l(i) de la rangée d'aubes membre avant présentant des valeurs supérieures à zéro, selon la relation v / l(i) > 0.

7. Groupe de rangées d'aubes selon une des revendications précédentes, **caractérisé en ce qu'**est présente une fente partielle sur au moins l'une des rangées d'aubes membres (i) ou (i+1), sachant qu'en observant l'agencement d'aubes dans une coupe de ligne d'écoulement méridienne (plan u-m) située à une distance infinitésimalement petite du bord de voie d'écoulement principale, est présente dans la zone sans fente une surface de coupe de profil et dans la zone avec fente est présente une surface frontale de profil, que la surface de coupe de profil est séparée par la ligne de délimitation amont Igv de la surface frontale de profil, que dans chaque profil d'aube est définie une ligne moyenne SKL s'étendant de manière centrée entre les côtés aspiration et refoulement, que la corde de profil Se est présente en tant que tangente respective au profil côté refoulement, que la profondeur de profil l est mesurée en direction de la corde de profil Se respective depuis le bord d'attaque respectif jusqu'au bord de fuite respectif, que la profondeur de fente partielle cv respective est mesurée en direction de la corde de profil respective depuis le bord de fuite respectif jusqu'au point d'intersection de la ligne moyenne respective avec la ligne de délimitation avant lgv respective, la profondeur de fente partielle cv étant définie selon la relation 0,05 < cv / l < 0,75.

8. Groupe de rangées d'aubes selon une des revendications précédentes, **caractérisé en ce que** sur la rangée d'aubes membre avant (i) est prévue une fente partielle et que la profondeur de fente partielle cv(i) du profil d'aube avant est définie selon une relation sélectionnée par rapport à la longueur v du passage secondaire et à la profondeur de profil du profil d'aube avant l(i) conformément à la règle : (v + 0,3*l(i)) / l(i) - 0,3 < cv(i) / l(i) < (v + 0,3*l(i)) / l(i) + 0,3.

9. Groupe de rangées d'aubes selon une des revendications précédentes, **caractérisé en ce qu'**est formée une fente partielle sur au moins une des rangées d'aubes membres (i) et (i+1), sachant qu'à l'intérieur de la zone entre la ligne de délimitation avant lgv et le bord de fuite est prévue au moins une interruption en forme de profil d'écoulement, de nervure ou lamellaire, qui a une liaison locale avec le bord de voie d'écoulement principale et subdivise la fente partielle.

10. Groupe de rangées d'aubes selon une des revendications précédentes, **caractérisé en ce qu'**est formée une fente partielle sur au moins une des rangées d'aubes membres (i) et (i+1), sachant que la ligne de délimitation, sur au moins une partie de son cours entre son point du côté refoulement du profil et le point S, est incurvée de manière convexe par rapport à la surface frontale de profil, afin de réaliser une transition favorisant l'écoulement entre côté refoulement du profil et ligne de délimitation.

11. Groupe de rangées d'aubes selon une des revendications précédentes, **caractérisé en ce que** dans la zone d'une fente partielle est prévue une coupe B-B plane ou incurvée à travers le profil d'aube d'une des rangées d'aubes membres (i) et (i+1), sachant que cette coupe est orientée perpendiculairement à un plan u-m situé à une distance infinitésimalement petite du bord de voie d'écoulement principale et s'étendant à travers la fente partielle, que dans la coupe B-B est présent un canal d'écoulement en raison de la fente entre la surface frontale de profil et le bord de voie d'écoulement principale, que la surface frontale de profil est incurvée de manière convexe au moins dans la zone de transition vers le côté refoulement du profil (vers le champ d'écoulement).

12. Groupe de rangées d'aubes selon une des revendications précédentes, **caractérisé en ce que** dans la zone d'une fente partielle est prévue une coupe B-B plane ou incurvée à travers le profil d'aube d'une des rangées d'aubes membres (i) et (i+1), sachant que cette coupe est orientée perpendiculairement à un plan u-m situé à une distance infinitésimalement petite du bord de voie d'écoulement principale et s'étendant à travers la fente partielle, que dans la coupe B-B est présent un canal d'écoulement en raison de la fente entre la surface frontale de profil et le bord de voie d'écoulement principale, que la largeur de canal kw est mesurée entre la surface frontale de profil et le bord de voie d'écoulement principale perpendiculairement audit bord de voie d'écoulement principale, que la largeur de canal kw diminue en direction du côté aspiration du profil dans au moins une partie du canal d'écoulement.

Fig. 1

# Fig. 2a

EP 2 947 270 B3

Fig. 2b

RSG    SSG    R    VSSG

(1) (2)   (1) (2) (3)   (2) (1)

r

x

# Fig.3

EP 2 947 270 B3

**Fig. 4**

Fig. 5a

**Fig. 5b**

Ansicht A-A

Fig. 6a

**Fig. 6b**

Ansicht A-A

SKL(i+1)

lgh(i+1)

ch(i+1)

cv(i+1)

l (i+1)

lgv(i+1)

v

Se(i+1)

ch(i)

cv(i)

lgh(i)

lgv(i)

l (i)

Se(i)

SKL(i)

m

u

**Fig. 7**

Ansicht A-A

# Fig. 8

Ansicht B-B

SS    DS

s ↑
  └→ q

Schaufelende

PSF

Pss

kw

e

HB

EP 2 947 270 B3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2261463 A2
- EP 1998049 A2